(19) **Europäisches Patentamt**
**European Patent Office**
**Office européen des brevets**

(11) **EP 3 870 946 B1**

(12) **EUROPÄISCHE PATENTSCHRIFT**

(45) Veröffentlichungstag und Bekanntmachung des Hinweises auf die Patenterteilung:
**16.11.2022 Patentblatt 2022/46**

(21) Anmeldenummer: **19786959.7**

(22) Anmeldetag: **11.10.2019**

(51) Internationale Patentklassifikation (IPC):
***G01K 17/20*** *(2006.01)*

(52) Gemeinsame Patentklassifikation (CPC):
**G01K 17/20; G01J 5/0014; G01J 5/07; G01N 25/18;** G01J 2005/0077; G01J 2005/066; G01J 2005/106

(86) Internationale Anmeldenummer:
**PCT/EP2019/077609**

(87) Internationale Veröffentlichungsnummer:
**WO 2020/083667 (30.04.2020 Gazette 2020/18)**

(54) **BESTIMMUNG VON WÄRMEDURCHGANGSKOEFFIZIENTEN AN WÄNDEN EINES RAUMES**

DETERMINING HEAT-TRANSFER COEFFICIENTS AT WALLS OF A ROOM

DÉFINITION DE COEFFICIENTS DE TRANSMISSION THERMIQUE SUR DES PAROIS D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2018 DE 102018218096**

(43) Veröffentlichungstag der Anmeldung:
**01.09.2021 Patentblatt 2021/35**

(73) Patentinhaber: **Deutsches Zentrum für Luft- und Raumfahrt e.V.**
**51147 Köln (DE)**

(72) Erfinder:
• **TIDDENS, Arne**
**50825 Köln (DE)**
• **SIEGRIST, Silvan**
**50674 Köln (DE)**

• **PATEL, Dhruvkumar**
**52428 Jülich (DE)**
• **ESTEVAM SCHMIEDT, Jacob**
**51103 Köln (DE)**
• **GORZALKA, Philip**
**51069 Köln (DE)**
• **KÖLSCH, Benedikt**
**42327 Wuppertal (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**DE-A1- 10 309 550          US-A- 4 934 830**
**US-A1- 2018 017 511**

## Beschreibung

Die vorliegende Erfindung betrifft ein Verfahren zur berührungslosen Bestimmung von Wärmedurchgangskoeffizienten an Wänden eines Raumes sowie ein entsprechendes System.

Gebäudeenergieberatungen basieren meist auf der Erfahrung von Energieberatern mit punktueller Unterstützung von Messtechnik. Diese Beratungen sind teuer, da für die Messung ein Experte vor Ort benötigt wird. Das Vorgehen, die Dokumentation und das Ergebnis sind nicht standardisiert und von stark schwankender Qualität und daher zumeist nicht miteinander vergleichbar. Eine einfache Einschätzung des energetischen Zustands eines Raumes ohne Vor-Ort-Analyse ist derzeit nicht umsetzbar.

Ein Parameter für die Analyse eines Raumes sind die Wärmedurchgangskoeffizienten der Wände, die sogenannten U-Werte.

Aus EP 1 684 065 A1 ist beispielsweise eine Vorrichtung zur Ermittlung des U-Wertes bekannt, bei der ein Thermoelement an der Wand befestigt wird. Ein ähnlicher Ansatz wird bei EP 2 938 980 B1 verfolgt, wobei ein Wärmeflusssensor verwendet wird. Die Messung erfolgt somit punktuell und berührend. Mittels der Wärmeflusssensoren wird der Wärmefluss üblicherweise über einen langen Zeitraum gemessen. Die Position der Anbringung der Sensoren ist essentiell, um eine Abschätzung auf die gesamte Wand durchführen zu können. Daher können die Systeme üblicherweise nicht von Laien verwendet werden. Weitere Beispiele sind in DE 103 09 550 A1, US 2018/017511 A1 und US 4 934 830 A zu finden.

Es ist ferner bekannt, dass über eine Infrarotkamera von der zu untersuchenden Wand eine Aufnahme erfolgt, um mittels der Infrarotbilddaten die punktuellen Messungen mittels Wärmeflusssensoren an der Wand auf die gesamte Fläche zu übertragen.

Sämtliche bekannten Verfahren haben den Nachteil, dass diese zumindest eine Messung berührend vornehmen, wobei die Position der Messung Fachwissen benötigt. Da das Messergebnis stark von der Position der Punktmessung abhängt, sind zumeist keine vergleichbaren Messungen mit der Punktmessung durchführbar. Ferner führen die bekannten Verfahren zumeist zu einem hohen experimentellen und zeitlichen Aufwand.

Es ist daher die Aufgabe der vorliegenden Erfindung, ein Verfahren zur Bestimmung von Wärmedurchgangskoeffizienten an Wänden zu schaffen, das berührungslos erfolgt, wobei ein genaues Messergebnis auch unabhängig von der Position einer Punktmessung erreicht werden kann. Ferner soll das erfindungsgemäße Verfahren einfach und mit geringem Zeitaufwand durchführbar sein. Es ist ferner Aufgabe der vorliegenden Erfindung, ein entsprechendes System zur Verfügung zu stellen.

Das erfindungsgemäße Verfahren ist definiert durch die Merkmale des Anspruch 1.

Das erfindungsgemäße System ist definiert durch die Merkmale des Anspruch 9.

Das erfindungsgemäße Verfahren zur berührungslosen Bestimmung von Wärmedurchgangskoeffizienten U an einer Wand eines Raumes weist folgende Schritte auf:

- Messung der Lufttemperatur $T_i$ in den Raum,
- Bereitstellen einer weiteren Lufttemperatur $T_{e1}$ eines an die Wand angrenzenden weiteren Raumes oder von Außenlufttemperaturen $T_{e2}$,
- Erstellen mindestens eines Panorama-Infrarotbildes des Raumes von einem beliebigen Punkt in dem Raum aus, wobei das Panorama-Infrarotbild zumindest ein sich horizontal erstreckendes 360°-Panorama umfasst,
- Auswerten des Panorama-Infrarotbildes und Bestimmung einer räumlich aufgelösten Wandtemperatur $T_s$ aus dem Panorama-Infrarotbild sowie Bestimmung der räumlich aufgelösten reflektierten Temperatur $T_{ref}$,
- Bestimmung der Wärmedurchgangskoeffizienten U der Wand über die Lufttemperatur $T_i$, der weiteren Lufttemperatur $T_{e1}$ oder der Außenlufttemperatur $T_{e2}$, der räumlich aufgelösten Wandtemperatur $T_s$ sowie der räumlich aufgelösten reflektierten Temperatur $T_{ref}$.

Da mittels des Panorama-Infrarotbildes neben Temperaturdaten der Wand auch Flächen, die im Strahlungsaustausch mit der Wand stehen, vermessen werden, lässt sich in vorteilhafter Weise die reflektierte Temperatur $T_{ref}$ bestimmen. In Kombination mit der bestimmten Wandtemperatur $T_s$, der Lufttemperatur $T_i$ und der in dem an die Wand angrenzenden Bereich herrschenden Temperatur lassen sich in vorteilhafter Weise Wärmedurchgangskoeffizienten U der Wand bestimmen. Dabei wird die Lufttemperatur eines angrenzenden weiteren Raumes der Wand verwendet, wenn die Wand eine Innenwand des Hauses ist. Im Falle, dass die Wand die Außenwand eines Hauses ist, wird die Außenlufttemperatur verwendet.

Zur Bestimmung des Wärmedurchgangskoeffizienten kann in vorteilhafter Weise die folgende Gleichung verwendet werden:

$$U = \frac{4\varepsilon\sigma T_s^3 \left( T_s - T_{ref} \right) + h(T_s - T_i)}{T_i - T_e}$$

Das erfindungsgemäße Verfahren ermöglicht somit auf einfache Art und Weise, den Wärmedurchgangskoeffizienten U zu bestimmen, ohne dass eine berührende Messung vorgenommen werden muss. Darüber hinaus ist die durch das Panorama-Infrarotbild eine räumliche Auflösung der Wandtemperaturdaten und der reflektierten Temperatur möglich, so dass der Wärmedurchgangskoeffizient U ebenfalls räumlich aufgelöst bestimmt werden kann.

Dadurch, dass eine räumlich aufgelöste Messung erfolgen kann, ist die Messqualität im Gegensatz zu der berührenden Punktmessung des Standes der Technik unabhängig von dem Messort. Die für die Erstellung des Panorama-Infrarotbildes verwendete Kamera kann an einem nahezu beliebigen Ort innerhalb des Raumes aufgestellt werden, so dass eine Person, die das Verfahren durchführt nahezu keine Vorkenntnisse aufweisen muss und dennoch ein zuverlässiges Ergebnis erhält. Das erfindungsgemäße Verfahren ist darüber hinaus mit vorrichtungstechnisch einfachem Aufbau durchführbar, da neben einer Kamera zur Aufnahme des Panorama-Infrarotbildes lediglich Vorrichtungen zur Messung der Lufttemperatur in dem Raum und zur Bestimmung der Lufttemperatur in dem weiteren Raum oder zur Außenlufttemperatur notwendig sind. Ferner wird eine Auswerteinheit für die Auswertung der Panoramabilder und der Bestimmung des Wärmedurchgangskoeffizienten verwendet.

Bei der Bestimmung der Außentemperatur $T_{e2}$ können auch Wetterdaten verwendet werden oder Temperaturverläufe. Dadurch lässt sich die Präzision erhöhen.

Bei dem erfindungsgemäßen Verfahren ist vorzugsweise vorgesehen, dass bei der Bestimmung einer räumlich aufgelösten Wandtemperatur $T_s$ aus dem Panorama-Infrarotbild und/oder bei der Bestimmung der räumlich aufgelösten reflektierten Temperatur $T_{ref}$ Abweichungen aufgrund von Reflektionen eines Gegenstandes oder einer Person im Raum korrigiert werden, wobei Infrarotbilddaten, die vorzugsweise aus dem Panorama-Infrarotbild stammen, zumindest einer gegenüberliegenden Wand verwendet werden. Das erfindungsgemäße Verfahren ermöglicht somit eine sehr genaue Messung, da Reflektionen der Gegenstände oder der Person im Raum herausgerechnet werden können. Hierzu können Infrarotbilddaten der gegenüberliegenden Wand bzw. anderer Wände verwendet werden. Die Reflektionen der Wärmestrahlung von beispielsweise einer in dem Raum befindlichen Person sind an mehreren Wänden vorhanden. Dadurch können diese relativ einfach erkannt und korrigiert werden, indem Abweichungen der Wärmestrahlung der Wand mit entsprechenden Stellen an anderen Wänden verglichen werden. Dadurch ist eine sehr genaue Bestimmung des Wärmedurchgangskoeffizienten möglich. Auch sind andere Störfaktoren auf diese Weise korrigierbar, wie beispielsweise erhöhte Wandtemperaturen aufgrund von Sonneneinstrahlung durch ein gegenüberliegendes Fenster oder beispielsweise ein Dachfenster.

Da mit dem erfindungsgemäßen Verfahren auf einfache Art und Weise Störfaktoren berücksichtig bzw. korrigiert werden können, indem diese beispielsweise herausgerechnet werden, lassen sich in vorteilhafter Weise auch Langzeitmessungen mit dem erfindungsgemäßen Verfahren durchführen.

Vorzugsweise ist bei dem erfindungsgemäßen Verfahren vorgesehen, dass bereitgestellte Geometriedaten des Raumes bei der Korrektur der Abweichungen aufgrund von Reflektionen von Gegenständen oder Personen im Raum und/oder bei der Bestimmung der räumlich aufgelösten reflektierten Temperatur $T_{ref}$ verwendet werden. Dadurch wird die Präzision der Bestimmung der räumlich aufgelösten Wandtemperatur sowie der räumlich aufgelösten reflektierten Temperatur erhöht, wodurch die Genauigkeit der Bestimmung des Wärmedurchgangskoeffizienten ebenfalls verbessert ist.

Dabei kann vorgesehen sein, dass die Geometriedaten des Raumes über das Panorama-Infrarotbild bestimmt werden. Dies kann durch eine entsprechende Auswertung des Panorama-Infrarotbildes erfolgen. Zusätzlich oder alternativ können die Geometriedaten des Raumes auch durch Vermessen des Räumen bestimmt werden. Dies kann einmalig vor einer Messung erfolgen. Grundsätzlich besteht auch die Möglichkeit, dass über eine Laserentfernungsmessung die Raumgeometrie bestimmt wird. Auf diese Weise ist eine sehr genaue Bestimmung von Geometriedaten des Raumes möglich.

Beim erfindungsgemäßen Verfahren kann ferner folgender Schritt vorgesehen sein:

- Messung der Luftfeuchtigkeit in dem Raum.

Durch die Bestimmung der Luftfeuchtigkeit in dem Raum lässt sich die Bestimmung des Wärmedurchgangskoeffizienten unabhängig von der Innenraumfeuchtigkeit durchführen, da sich diese durch den bestimmten Luftfeuchtigkeitswert im Raum herausrechnen lässt. Über die Luftfeuchtigkeitsdaten kann auch auf Ursprünge von Abweichungen des Wärmedurchgangskoeffizienten an der Wand bestimmen, die beispielsweise durch Wärmebrücken, Wasserrohrbrüche oder Ähnlichem hervorgerufen werden. Hierzu können beispielsweise mittels der gemessenen Luftfeuchtigkeit, der gemessenen Lufttemperatur sowie der räumlich aufgelösten Wandtemperatur Taupunktanalysen der Wand durchgeführt werden, indem auf die Feuchtigkeit aufgrund von Kondensation von Raumluft an der Wand geschlossen wird. Das 360°-Panoramabild kann aus einzelnen Infrarotbildern zusammengesetzt sein. Diese können durch mehrere Infrarotsensoren aufgenommen werden. Auch besteht die Möglichkeit, dass das 360°-Panoramabild beispielsweise durch Verschwenken einer Infrarotkamera aufgenommen wird. Das Panorama-Infrarotbild kann zusätzlich zu dem sich horizontal erstreckenden 360°-Panorama auch ein sich vertikal erstreckendes 360°-Panorama umfassen, so dass beispielsweise das Panorama-Infrarotbild ein Vollsphärenbild ist.

Vorzugsweise erfolgt das Erstellen des Panorama-Infrarotbildes des Raumes mittels einer VIS-IR-Kamera, wobei ein Infrarotbild über den vollen Raumwinkel erstellt wird.

Die Erfindung kann ferner vorsehen, dass die Luftaustauschrate des Raumes gemessen wird. Dies kann beispielsweise über eine Tracergasmessung erfolgen. Dabei kann außerhalb des Raumes ein Tracergas ausgestoßen werden, das in dem Raum detektiert wird. Über die Luftaustauschrate des Raumes kann beispielsweise auf das Lüftungsverhalten des Raumes geschlossen werden. Dadurch können ungewöhnliche Abweichungen bei der Bestimmung des Wärmeübergangskoeffizienten der Wand erkannt und ausgeschlossen werden, wie sie beispielsweise durch starke Luftzüge während der Aufnahme des Panorama-Infrarotbildes vorliegen können. Zusätzlich oder alternativ kann hierzu auch die Luftgeschwindigkeit in dem Raum gemessen werden.

Mittels des erfindungsgemäßen Verfahrens lässt sich aufgrund der Kombination der Raumgeometrie mit den bestimmten Wärmedurchgangskoeffizienten ein energetisches Gebäudemodell erstellen, indem die Wärmedurchgangskoeffizienten an mehreren Wänden bestimmt werden. Über das energetische Gebäudemodell kann beispielsweise eine Jahresbedarfsanalyse und Optimierung der Sanierung eines Gebäudes ohne die Anwesenheit von Gutachtern durchgeführt werden.

Grundsätzlich hat das erfindungsgemäße Verfahren auch den Vorteil, dass die mittels des Verfahrens ermittelten Daten von einem Gutachter ausgewertet werden können, ohne dass der Gutachter sich vor Ort befinden muss.

Durch die Bestimmung der räumlich aufgelösten Wandtemperatur kann man eine quantitative Bestimmung der Temperatur für den gesamten Raum auf einfache Art und Weise durchführen, da nicht entschieden werden muss, an welcher Stelle im Raum eine Messung durchgeführt werden soll. Somit erfolgt eine objektive Bestimmung der Temperatur, die ohne Fachkenntnisse erfolgreich durchgeführt werden kann.

Die Erfindung sieht ferner ein System zur berührungslosen Bestimmung von Wärmedurchgangskoeffizienten U an einer Wand eines Raumes vor. Das System weist einen Lufttemperatursensor, eine System zur Bereitstellung einer weiteren Lufttemperatur $T_{e1}$ eines an der Wand angrenzenden weiteren Raumes oder eine Außenlufttemperatur $T_{e2}$, mindesten eine vorzugsweise zumindest in eine Richtung um 360° verschwenkbare Infrarotkamera und/oder mehrere Infrarotsensoren zur Erstellung eines Panorama-Infrarotbildes und eine Bildverarbeitungseinrichtung zur Auswertung des Panorama-Infrarotbildes und Bestimmung einer räumlich aufgelösten Wandtemperatur $T_s$ aus dem Panorama-Infrarotbild und zur Bestimmung der räumlich aufgelösten reflektierten Temperatur $T_{ref}$.

Mittels des erfindungsgemäßen Systems lässt sich somit in vorteilhafter Weise das erfindungsgemäße Verfahren durchführen. Die einzelnen Komponenten des Systems können automatisch arbeiten, so dass das System auch von einem Laien ohne Vorkenntnis in vorteilhafter Weise bedienbar ist. Die Infrarotkamera kann beispielsweise einen Antrieb aufweisen, so dass das Panorama-Infrarotbild ebenfalls automatisch und ohne weiteres Zutun eines Benutzers erstellt werden kann. Bei einem erfindungsgemäßen System mit mehreren Infrarotsensoren können mehrere Infrarotbilder erzeugt werden, die zu dem Panorama-Infrarotbild zusammengesetzt werden. Durch die Aufnahme eines Panorama-Infrarotbildes ist darüber hinaus der Aufstellungsort des Systems im Raum nahezu beliebig wählbar und es ist auch keine genaue Ausrichtung zu beachten.

Die Infrarotkamera kann auch noch in andere Richtungen, beispielsweise in einer vertikalen Ebene verschwenkt werden, so dass auch Vollsphärenaufnahmen möglich sind.

Das erfindungsgemäße System kann auch als ein mobiles System, das von dem Benutzer per Hand tragbar ist und bei der Vornahme der Messung in der Hand gehalten wird, verwendet werden.

Vorzugsweise weist die Bildverarbeitungseinrichtung des erfindungsgemäßen Systems eine Geometriebestimmungseinrichtung zur Bestimmung der Geometriedaten des Raumes aus dem Panorama-Infrarotbild auf. Somit kann das erfindungsgemäße System in vorteilhafter Weise aus den aufgenommenen Daten die Geometrie des Raumes, in dem das System eingesetzt wird, ermitteln. Über die Geometriedaten können gemäß dem erfindungsgemäßen Verfahren beispielsweise in vorteilhafter Weise Abweichungen in dem Panorama-Infrarotbild, die durch Reflektionen hervorgerufen werden, ermittelt und korrigiert werden.

Das erfindungsgemäße System kann auch eine Entfernungsmesseinrichtung aufweisen, mittels der ebenfalls Geometriedaten des Raumes ermittelt werden können.

Ferner kann das erfindungsgemäße System einen Tracergassensor zur Bestimmung einer Luftaustauschrate des Raumes aufweisen.

Das System zur Bereitstellung einer weiteren Lufttemperatur eines an der Wand angrenzenden weiteren Raumes oder der Außenlufttemperatur kann beispielsweise einen mobilen Temperatursensor umfassen, der in dem angrenzenden Raum oder außen angeordnet ist und beispielsweise drahtlos Temperaturdaten an das System überträgt.

Im Folgenden wird unter Bezugnahme auf die nachfolgenden Figuren die Erfindung näher erläutert. Es zeigen

Figur 1 ein erstes Ausführungsbeispiel eines erfindungsgemäßen Systems mit drehbarer Infrarotkamera und

Figur 2 ein tragbares System mit mehreren Infrarotsensoren.

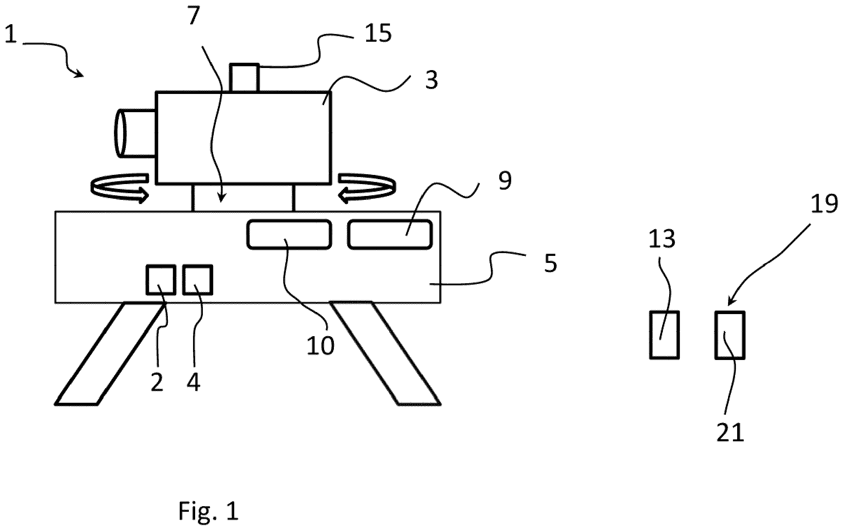

In Figur 1 ist ein erstes Ausführungsbeispiel eines erfindungsgemäßen Systems 1 zur berührungslosen Bestimmung von Wärmedurchgangskoeffizienten U an einer Wand eines Raumes in einer schematischen Darstellung. Das erfindungsgemäße System 1 weist einen Temperatursensor 2 zur Bestimmung der Temperatur der Luft in dem Raum auf. Ferner weist das System einen Luftfeuchtigkeitssensor 4 auf, über den die Luftfeuchtigkeit in dem Raum bestimmbar ist. Das System 1 weist darüber hinaus eine in eine Richtung um 360° verschwenkbare Infrarotkamera 3 auf. Die Infrarotkamera 3 dient zur Erstellung eines Panorama-Infrarotbildes. Die Infrarotkamera 3 ist auf einem Gehäuse 5 angeordnet. Ferner weist die Infrarotkamera 3 einen Antrieb 7 auf, über den ein automatisches Verschwenken der Infrarotkamera erfolgen kann. Auf diese Weise lassen sich in vorteilhafter Weise Panorama-Infrarotbilder des Raumes erstellen.

In dem Gehäuse 5 ist eine Bildverarbeitungseinrichtung 9 angeordnet, die das Panorama-Infrarotbild auswertet. Hierbei wird aus dem Panorama-Infrarotbild eine räumlich aufgelöste Wandtemperatur bestimmt. Ferner kann die Bildverarbeitungseinrichtung 9 Reflexionen an den Wänden, die von Objekten im Raum oder einer oder einer gegenüberliegenden Wand hervorgerufen werden, erkennen und bei der Auswertung korrigieren. Die Bildverarbeitungseinrichtung 9 kann auch eine Geometriebestimmungseinrichtung aufweisen, mittels der aus dem Panorama-Infrarotbild Geometriedaten des Raumes ermittelt werden. Diese können beispielsweise bei der Erkennung der Reflektionen verwendet werden.

Die Bilderverarbeitungseinrichtung 9 kann auch eine Wandtemperaturbestimmungseinrichtung aufweisen, wobei aus dem Panorama-Infrarotbild eine räumlich aufgelöste Wandtemperatur bestimmt wird. Ferner kann die Bildverarbeitungseinrichtung 9 auch die räumlich aufgelöste reflektierte Temperatur bestimmen.

Das erfindungsgemäße System 1 kann ferner einen Tracergassensor 10 zur Bestimmung einer Luftaustauschrate des Raumes aufweisen. Für die Abgabe des Tracergases, das von dem Tracergassensor 10 sensiert wird, kann eine mobile Tracergasabgabevorrichtung 13 vorgesehen sein, über die außerhalb des Raumes Tracergas abgegeben werden kann.

Das erfindungsgemäße System 1 weist ferner ein System 19 zur Bereitstellung einer weiteren Lufttemperatur oder einer Außenlufttemperatur auf. Das System 19 weist hierfür einen mobilen Temperatursensor auf, über den die weitere Lufttemperatur oder die Außenlufttemperatur an das System 1 drahtlos übertragbar ist.

Das System 1 weist ferner eine optische Entfernungsmesseinrichtung 15 auf, über die die Geometrie des Raumes bestimmbar ist. Die optische Entfernungsmesseinrichtung 15, die beispielsweise eine Laserentfernungsmessung durchführen kann, ist vorzugsweise an der verschwenkbaren Infrarotkamera angeordnet, so dass die optische Entfernungsmesseinrichtung 15 ebenfalls um 360° verschwenkbar ist.

Das erfindungsgemäße System 1 kann ferner eine nicht dargestellte Recheneinrichtung aufweisen oder mit einer Recheneinrichtung verbunden sein, mittels der die Berechnung der Wärmedurchgangskoeffizienten U der Wand durchgeführt werden.

Grundsätzlich kann das System 1 eine um 360° verschwenkbare Infrarotkamera aufweisen. Zusätzlich oder alternativ können auch mehrere Infrarotsensoren vorgesehen sein, die an dem System 1 angeordnet sind und in unterschiedliche Richtungen blicken.

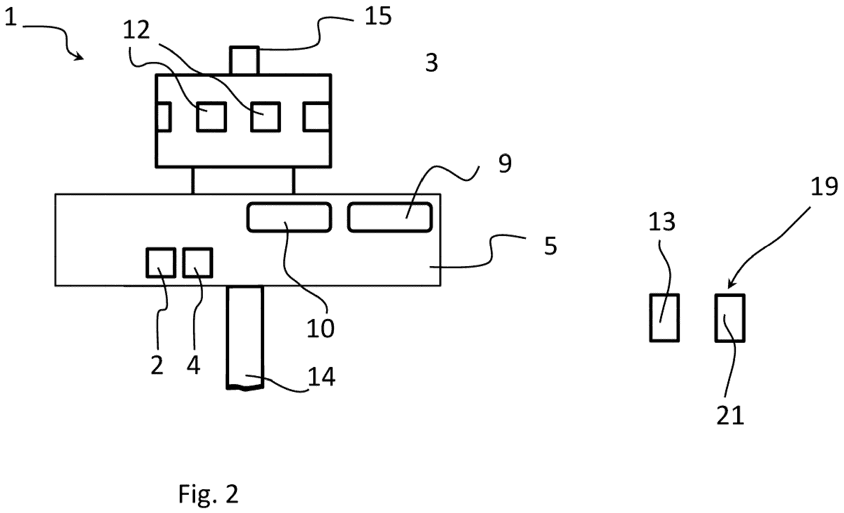

In Figur 2 ist ein alternatives Ausführungsbeispiel eines erfindungsgemäßen Systems 1 gezeigt. Das in Figur 2 gezeigte System 1 entspricht im Wesentlichen dem in Figur 1 dargestellten System mit dem Unterschied, dass keine über einen Antrieb verschwenkbare Infrarotkamera vorgesehen ist. Anstelle der Infrarotkamera zeigt das in Figur 2 dargestellte Ausführungsbeispiel mehrere Infrarotsensoren 12. Ferner handelt es sich bei dem in Figur 2 dargestellten Ausführungsbeispiel um ein tragbares System, wobei an der Unterseite ein Griff 14 angeordnet ist, über den das System 1 von dem Benutzer getragen werden kann.

An dem Griff 14 können auch nicht dargestellte Bedieneinheiten, wie beispielsweise eine Betätigungstaste, angeordnet sein.

Die erfindungsgemäßen Systeme 1 können in vorteilhafter Weise das erfindungsgemäße Verfahren durchführen.

**Patentansprüche**

1. Verfahren zur berührungslosen Bestimmung von Wärmedurchgangskoeffizienten U an einer Wand eines Raumes mit folgenden Schritten:

   - Messung der Lufttemperatur $T_i$ in dem Raum,
   - Bereitstellen einer weiteren Lufttemperatur $T_{e1}$ eines an die Wand angrenzenden weiteren Raumes oder einer Außenlufttemperatur $T_{e2}$,
   - Erstellen mindestens eines Panorama-Infrarotbildes des Raumes von einem beliebigen Punkt in dem Raum aus, wobei das Panorama-Infrarotbild zumindest ein sich horizontal erstreckendes 360°-Panorama umfasst,
   - Auswertung des Panorama-Infrarotbildes und Bestimmung einer räumlich aufgelösten Wandtemperatur $T_s$ aus dem Panorama-Infrarotbild sowie Bestimmung der räumlich aufgelösten reflektierten Temperatur $T_{ref}$,
   - Bestimmung der Wärmedurchgangskoeffizienten U der Wand über die Lufttemperatur $T_i$, der weiteren Lufttemperatur $T_{e1}$ oder der Außenlufttemperatur $T_{e2}$, der räumlich aufgelösten Wandtemperatur $T_s$ sowie der räumlich aufgelösten reflektierten Temperatur $T_{ref}$.

2. Verfahren nach Anspruch 1, **dadurch gekennzeichnet, dass** bei der Bestimmung einer räumlich aufgelösten Wandtemperatur $T_s$ aus dem Panorama-Infrarotbild und/oder bei der Bestimmung der räumlich aufgelösten reflektierten Temperatur $T_{ref}$

Abweichungen aufgrund von Reflexionen eines Gegenstandes oder einer Person im Raum korrigiert werden, wobei Infrarotbilddaten zumindest einer gegenüberliegenden Wand verwendet werden.

3. Verfahren nach Anspruch 1 oder 2, **dadurch gekennzeichnet, dass** bereitgestellte Geometriedaten des Raumes bei der Korrektur der Abweichungen aufgrund von Reflexionen von Gegenständen oder Personen im Raum und/oder bei der Bestimmung der räumlich aufgelösten reflektierten Temperatur $T_{ref}$ verwendet werden.

4. Verfahren nach Anspruch 3, **dadurch gekennzeichnet, dass** über das Panorama-Infrarotbild die Geometriedaten des Raumes bestimmt werden.

5. Verfahren nach Anspruch 3 oder 4, **dadurch gekennzeichnet, dass** die Geometriedaten des Raumes durch Vermessen des Raumes bestimmt werden.

6. Verfahren nach einem der Ansprüche 1 bis 5, **gekennzeichnet durch** folgenden Schritt:

    - Messung der Luftfeuchtigkeit in dem Raum.

7. Verfahren nach einem der Ansprüche 1 bis 6, **dadurch gekennzeichnet, dass** das Erstellen des Panorama-Infrarotbildes des Raumes mittels eine VIS-IR-Kamera erfolgt, wobei ein Infrarotbild über den vollen Raumwinkel erstellt wird.

8. Verfahren nach einem der Ansprüche 1 bis 7, **dadurch gekennzeichnet, dass** die Luftaustauschrade des Raumes gemessen wird.

9. System (1) zur berührungslosen Bestimmung von Wärmedurchgangskoeffizienten U an einer Wand eines Raumes

    - mit einem Lufttemperatursensor (2),
    - einem System (19) zur Bereitstellung einer weiteren Lufttemperatur $T_{e1}$ eines an der Wand angrenzenden weiteren Raumes oder von Außenlufttemperaturen $T_{e2}$
    - mit mindestens einer vorzugsweise zumindest in eine Richtung vorzugsweise um 360° verschwenkbaren Infrarot-Kamera (3) und/oder mehrerer Infrarotsensoren (12) zur Erstellung eines Panorama-Infrarotbildes,
    - mit einer Bildverarbeitungseinrichtung zur Auswertung des Panorama-Infrarotbildes und Bestimmung einer räumlich aufgelösten Wandtemperatur $T_s$ aus dem Panorama-Infrarotbild und zur Bestimmung der räumlich aufgelösten reflektierten Temperatur $T_{ref}$.

10. System nach Anspruch 9, **dadurch gekennzeichnet, dass** die Bildverarbeitungseinrichtung eine Geometriebestimmungseinrichtung zur Bestimmung der Geometriedaten des Raumes aus dem Panorama-Infrarotbild aufweist.

11. System nach Anspruch 9 oder 10, **gekennzeichnet durch** eine optische Entfernungsmesseinrichtung (15).

12. System nach einem der Ansprüche 9 bis 11, **gekennzeichnet durch** einen Tracergassensor zur Bestimmung einer Luftaustauschrate des Raumes.

13. Verwendung eines Systems nach einem der Ansprüche 9 bis 12 zur Durchführung des Verfahrens nach einem der Ansprüche 1 bis 8.

**Claims**

1. A method for contactless determination of heat transition coefficients U at a wall of a room, comprising the following steps:

    - measuring the air temperature $T_i$ in the room,
    - providing a further air temperature $T_{e1}$ of a further room adjacent to the wall, or an external air temperature $T_{e2}$,
    - creating at least one panorama infrared image of the room from any position in the room, wherein the panorama infrared image at least comprises a horizontally extending 360° panorama,
    - evaluating the panorama infrared image and determining a spatially resolved wall temperature $T_s$ from the panorama infrared image as well as determining the spatially resolved reflected temperature $T_{ref}$,
    - determining the heat transition coefficients U of the wall by the air temperature $T_i$, the further air temperature $T_{e1}$ or the external air temperature $T_{e2}$, the spatially resolved wall temperature $T_s$ as well as the spatially resolved reflected temperature $T_{ref}$.

2. The method according to claim 1, **characterized in that**, when determining the spatially resolved wall temperature $T_s$ from the panorama infrared image and/or when determining the spatially resolved reflected temperature $T_{ref}$, deviations due to reflections of an object or a person in the room can be corrected, wherein infrared image data of at least one opposite wall are used.

3. The method according to claim 1 or 2, **characterized in that** the provided geometric data of the room are used when correcting the deviations due to reflections of objects or persons in the room and/or when determining the spatially resolved reflected temperature $T_{ref}$.

4. The method according to claim 3, **characterized in that** the geometric data of the room are determined by the panorama infrared image.

5. The method according to claim 3 or 4, **characterized in that** the geometric data of the room are determined by measuring the room.

6. The method according to any one of claims 1 to 5, **characterized by** the following step:

   - measuring the humidity in the room.

7. The method according to any one of claims 1 to 6, **characterized in that** the panorama infrared image of the room is created by means of a VIS IR camera, wherein an infrared image is created over the full solid angle.

8. The method according to any one of claims 1 to 7, **characterized in that** the air exchange rate of the room is measured.

9. A system (1) for contactless determination of heat transition coefficients U at a wall of a room, comprising

   - an air temperature sensor (2),
   - a system (19) for providing a further air temperature $T_{e1}$ of a further room adjacent to the wall, or external air temperatures $T_{e2}$,
   - at least one infrared camera (3) preferably pivotable to at least one direction preferably by 360° and/or several infrared sensors (12) for creating a panorama infrared image,
   - an image processing device for evaluating the panorama infrared image and determining a spatially resolved wall temperature $T_s$ from the panorama infrared image and for determining the spatially resolved reflected temperature $T_{ref}$.

10. The system according to claim 9, **characterized in that** the image processing device comprises a geometry determination device for determining the geometric data of the room from the panorama infrared image.

11. The system according to claim 9 or 10, **characterized by** an optical distance measuring device (15).

12. The system according to any one of claims 9 to 11, **characterized by** a tracer gas sensor for determining an air exchange rate of the room.

13. Using a system according to any one of claims 9 to 12 for carrying out the method according to any one of claims 1 to 8.

**Revendications**

1. Procédé de détermination sans contact de coefficients de transmission thermique U sur un mur d'une pièce avec les étapes suivantes :

   - mesure d'une température de l'air $T_i$ dans la pièce,
   - préparation d'une température de l'air ultérieure $T_{e1}$ d'une pièce ultérieure adjacente au mur ou d'une température de l'air extérieur $T_{e2}$,
   - création d'au moins une image infrarouge panoramique de la pièce depuis un point arbitraire dans la pièce, dans lequel l'image infrarouge panoramique comprend au moins un panorama horizontal à 360°,
   - analyse de l'image infrarouge panoramique et détermination d'une température murale $T_s$ résolue spatialement à partir de l'image infrarouge panoramique ainsi que détermination de la température réfléchie $T_{ref}$ résolue spatialement,
   - détermination des coefficients de transmission thermique U du mur par le biais de la température de l'air $T_i$, de la température de l'air ultérieure $T_{e1}$ ou de la température de l'air extérieur $T_{e2}$, de la température murale $T_s$ résolue spatialement ainsi que de la température réfléchie $T_{ref}$ résolue spatialement.

2. Procédé selon la revendication 1, **caractérisé en ce que** lors de la détermination d'une température murale $T_s$ résolue spatialement à partir de l'image infrarouge panoramique et/ou lors de la détermination de la température réfléchie $T_{ref}$ résolue spatialement, des écarts résultant de réflexions d'un objet ou d'une personne dans la pièce sont corrigés, dans lequel des données d'images infrarouge d'au moins un mur opposé sont utilisées.

3. Procédé selon la revendication 1 ou 2, **caractérisé en ce que** des données géométriques de la pièce préparées sont utilisées lors de la correction des écarts résultant de réflexions d'un objet ou d'une personne dans la pièce et/ou lors de la détermination de la température réfléchie $T_{ref}$ résolue spatialement.

4. Procédé selon la revendication 3, **caractérisé en ce que** les données géométriques de la pièce sont déterminées par le biais de l'image infrarouge panoramique.

5. Procédé selon la revendication 3 ou 4, **caractérisé en ce que** les données géométriques de la pièce sont déterminées par mesurage de la pièce.

6. Procédé selon l'une des revendications 1 à 5, **caractérisé par** l'étape suivante :

    - mesure de l'humidité de l'air dans la pièce.

7. Procédé selon l'une des revendications 1 à 6, **caractérisé en ce que** la création de l'image infrarouge panoramique de la pièce est effectuée au moyen d'une caméra VIS-IR, dans lequel une image infrarouge est créée sur l'intégralité de l'angle solide.

8. Procédé selon l'une des revendications 1 à 7, **caractérisé en ce que** le taux de remplacement d'air de la pièce est mesuré.

9. Système (1) destiné à la détermination sans contact de coefficients de transmission thermique U sur un mur d'une pièce

    - doté d'un capteur de température d'air (2),
    - d'un système (19) de préparation d'une température de l'air ultérieure $T_{e1}$ d'une pièce ultérieure adjacente au mur ou de températures de l'air extérieur $T_{e2}$
    - doté d'au moins une caméra infrarouge (3) pivotante de préférence au moins dans une direction, de préférence à 360°, et/ou de plusieurs capteurs infrarouge (12) destinés à créer une image infrarouge panoramique,
    - doté d'un dispositif de traitement d'image destiné à l'analyse de l'image infrarouge panoramique et détermination d'une température murale $T_s$ résolue spatialement à partir de l'image infrarouge panoramique et destiné à la détermination de la température réfléchie $T_{ref}$ résolue spatialement.

10. Système selon la revendication 9, **caractérisé en ce que** le dispositif de traitement d'image comporte un dispositif de détermination de géométrie destiné à déterminer les données géométriques de la pièce à partir de l'image infrarouge panoramique.

11. Système selon la revendication 9 ou 10, **caractérisé par** un dispositif télémétrique optique (15).

12. Système selon l'une des revendications 9 à 11, **caractérisé par** un capteur de gaz témoin destiné à déterminer le taux de remplacement d'air de la pièce.

13. Utilisation d'un système selon l'une des revendications 9 à 12 pour la mise en œuvre du procédé selon l'une des revendications 1 à 8.

Fig. 1

Fig. 2

EP 3 870 946 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1684065 A1
- EP 2938980 B1
- DE 10309550 A1
- US 2018017511 A1
- US 4934830 A